# EUROPEAN PATENT APPLICATION

(11) **EP 1 926 257 A1**
(43) Date of publication of application: **28.05.2008**
(21) Application number: 06425805.6
(22) Date of filing: 27.11.2006
(51) Int. Cl.: H04L 12/56

(54) **Method for decoupling congestion control in a cascade of network elements of an UMTS radio access network**

(71) Applicant: Nokia Siemens Networks GmbH & Co. KG, 81541 München (DE)
(72) Inventor: De Benedittis, Rosella, 20137 Milano (IT); Durastante, Gianluca, 67040 Poggio Di Roio (IT); Malafronte, Gennaro Ciro, 80050 Casola di Napoli (IT)

(57) **Abstract**

There is disclosed method of controlling transport network layer congestion detection in 3GPP HSDPA systems. According to the method, a first and a second SRNC for respective UEs camped in the same service area, generate respective packet flows of HS-DSCH data frames including among other fields FSN and DRT lEs synchronous to their respective internal RFN counters. The HS-DSCH frames are transmitted on respective lur interfaces towards a common DRNC which processes the incoming FSN and DRT IEs on a per flow basis for managing downlink transmission credits allocation on the lur. Before forwarding the two packet flows towards the same Node B, the DRNC regenerates the FSN and DRT IEs locally in order to recovery gaps in the received FSN and to impress a sort of time stamp in the DRT indicating the time instant when a frame is sent to the Node B from the DRNC itself. In its turn, Node B processes the received lEs in transparent way for managing downlink transmission credit allocation at the lub. DRNC takes and combines the credit indication signalled by Node B and the credits computed by itself (e.g. taking the minimum) for that data flow, and includes the results in the capacity allocation message sent to the relevant SRNC (fig.2A).

## Description

### Field of the invention

The present invention relates to the field of the UMTS networks, and more precisely to a method for decoupling congestion control in a cascade of network elements of an UMTS radio access network.

### Background of the invention

3GPP (3rd Generation Partnership Project) will aim to increase downward throughput of its Universal Mobile Telecommunication Systems (UMTS) based on Wideband Code Division Multiple Access (WCDMA) other than data rate up to 2.5 Mb/s attained before Release 5. This should allow to face fast increment on the demand by users of wireless communication systems for data services, like e-mail, file download, web browsing, multimedia streaming, etc. Different improvements are foreseen, e.g.: by using Multiple Input Multiple Output (MIMO) or other antenna array techniques, and possibly asymmetric allocation of frequency spectrum in multi-carrier cells. One of these improvements called High-Speed Downlink Packet Access (HSDPA), utilizes the air-interface in an efficient manner by implementing shorter transmission time intervals (TTI). Contrary to the philosophy aiming ordinary WCDMA, the higher HSDPA throughput is achieved by spending more resources on users with favourable channel qualities. Allotted resources are for example, higher modulation and coding schemes (MCS), more channelization codes (spreading codes), more frequent TTI scheduling when the channel is favourable. Quadrature Phase Shift Keying (QPSK) and 16QAM (Quadrature Amplitude Modulation) are possible implemented modulations while coding schemes are characterized by their robustness against the errors. The technological enhancements incorporated by HSDPA not only provide a spectral efficiency gain, but also support user data rates up e.g. to 8 - 10 Mb/s, i.e. rates about 4 - 5 times higher than e. g. the IMT-2000 (International Mobile Telecommunications 2000) requirements.

The features of HSDPA have been defined in 3GPP Technical Specifications starting from Release 5. HSDPA has the following purposes and properties:
- Data transmission in downlink direction only, i.e. from the Core Network (CN) via the Radio Network Control (RNC) to the subscriber;
- Support of services from different Quality of Service (QoS) classes:
   - Background, e.g. file download, E-mail delivery, SMS etc.: lowest priority, low timing constraints, but preservation of payload contents (low bit error rate);
   - Interactive, e.g. web browsing, data base retrieval, server access, polling of measurement reports: higher traffic priority than background class traffic; end-to-end delay caused by HSDPA must be acceptable in a human- or machine-initiated request response pattern, i.e. it should not exceed a few seconds;
   - Streaming, e.g. video/audio streaming: guaranteed, but with variable bit rate; the transmission delay must not exceed a certain time (- 250 ms).

An important issue with HSDPA traffic is the timely detection of transport network layer congestion at the lub/lur interface, i.e. the interface (lub) between the RNC and the Node B, or (lur) between a Serving RNC (SRNC) and a Drift RNC (DRNC), respectively. The external HSDPA flow control between the Node B and the RNC adjusts the lub/lur traffic flow to the available throughput at the air interface individually for each HSDPA traffic flow. It may happen that the capacity allocation messages from Node B to RNC result in a total capacity greater than the available lub/lur transport capacity, which often is not dimensioned according to the maximum air interface throughput since it is a very expensive resource. Under congestion conditions, packets at the physical and data link layers (e.g. ATM/AAL2 packets) could become lost and the Radio Link Control (RLC) layer has to initiate re-transmissions that significantly degrade the average throughput per HSDPA user.

Both the international Patent Applications WO 2005/107293 A1 and WO 2005/104672 A2 (Ericsson) disclose some interesting HSDPA congestion control mechanisms useful for detecting an incoming congestion state on the lub and/or lur interface. The enhancements overcome some drawbacks of the previous UTRAN Releases (i.e. before Release 5) due to the poor congestion detection at the lub/lur interface only based on the check of Cyclical Redundancy Code (CRC) in the payload and/or header of HS-DSCH Frame Protocol (FP) Data Unit (PDU) received at the Node B. Under congestion conditions, packets at the physical and data link layers (e.g. ATM/AAL2 packets) could become lost and the Radio Link Control (RLC) layer has to initiate re-transmissions that significantly degrade the average throughput per HSDPA users. Enhancements disclosed in the cited patent documents consist of using two new fields or Information Elements (IE) defined in the FP frames of a data flow, namely the Frame Sequence Number (FSN) and the Delay Reference Time (DRT).
- Essentially, FSN is a 4-bit field incremented by the SRNC at each transmitted HS-DSCH FP data frame belonging to a specific data flow. DRT is a 16-bit field that represents the count of a counter that is locked to the RNC Frame Number Counter (RFN) in the Serving RNC (SRNC), i.e. the RNC which actually controls the radio connection, and that counts from 0 to 40959 ms with a 1 ms resolution. The DRT values are a kind of time stamp of the transmission instant for a given HS-DSCH FP data frame. Field FSN can be used by the Node B to estimate the packet loss rate, whereas field DRT can be used by Node B for dynamic delay variation measurements. Field DRT allows the Node B to detect in advance that congestion situations are about to occur, so that the Node B can timely request a reduction of the throughput on the lub/lur interface to the SRNC; on the other hand, if congestion occurs, the FSN field allows reducing to a minimum the impacts on the traffic, i.e. data losses.

The teachings of the two cited patent documents give rise to some relevant enhancements included in 3GPP Release 6 Technical Specifications (TS), as for example:
- TS 25.425 "UTRAN lur interface user plane protocols for Common Transport Channel data streams".
- TS 25.435 "UTRAN lub Interface User Plane Protocols for Common Transport Channel data streams".
- TS 25.423 "UTRAN lur interface Radio Network Subsystem Application Part (RNSAP) signalling".
- TS 25.433 "UTRAN lub interface Node B Application Part (NBAP) signalling".
- Technical Report (TR) 25.902 "lub/lur congestion control".

Information about the current versions of those and other specification documents and the publication dates thereof can be found at the 3GPP site ww.3GPP.org.

### Approach to the technical problem

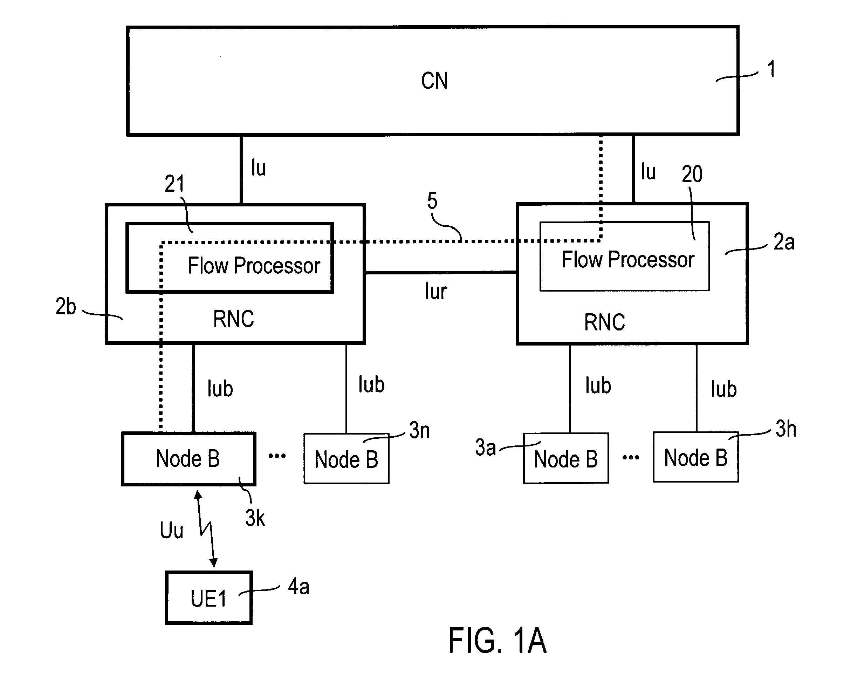

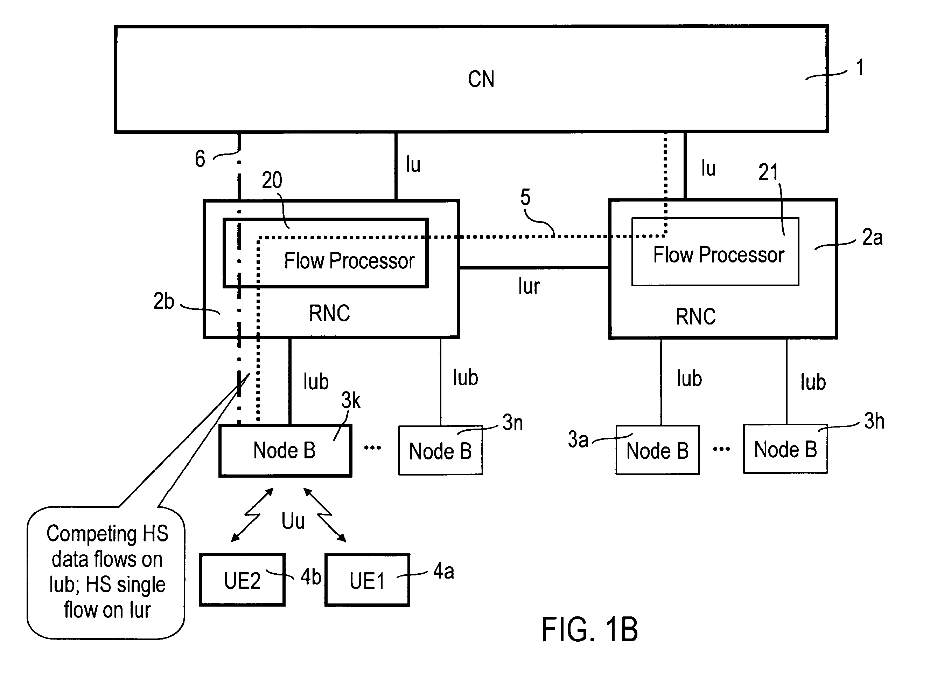

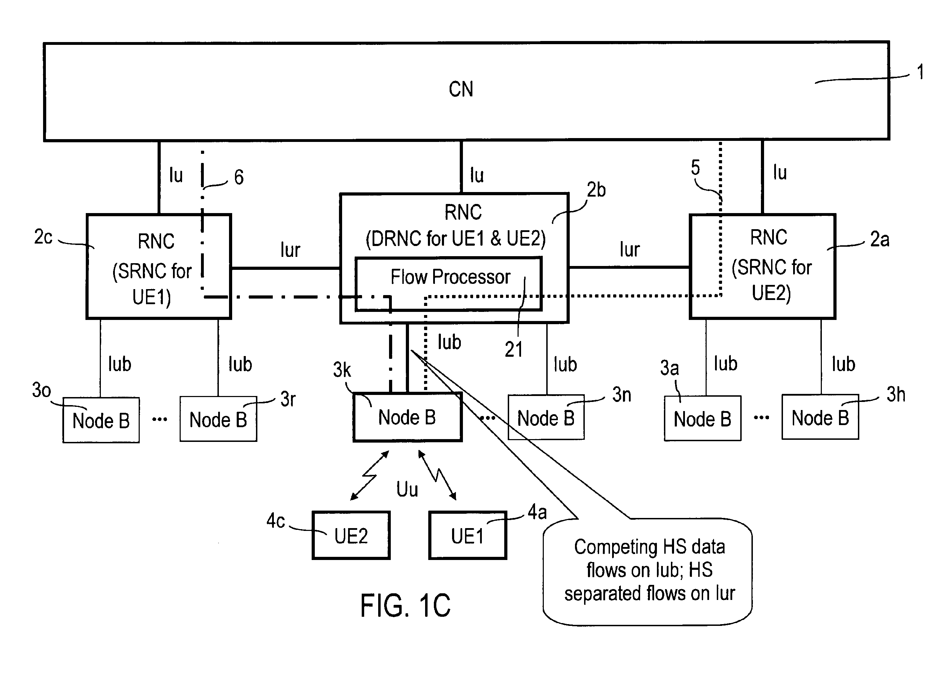

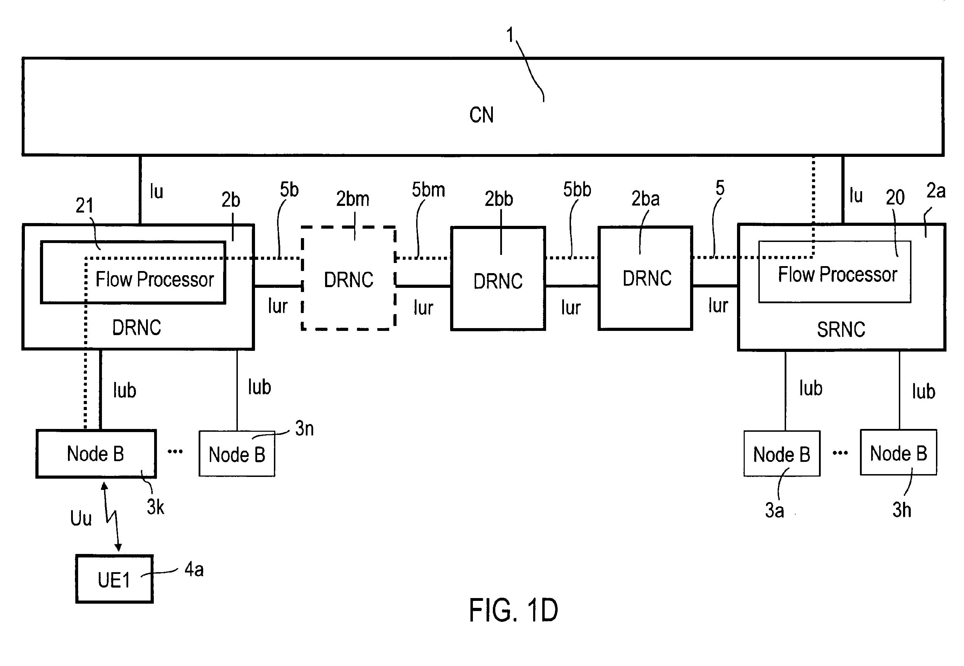

Despite the improvement on congestion control due to the congestion management exploiting the FSN and DRT fields, still some problems in establishing the congested path arise in an UTRAN configuration with cascaded Network Elements (NE) that are giving rise to two or more HS-DSCH data flows competing at the lub interface. Focusing on the technical problem requests of going back to some general notions about UTRAN architecture (see fig.1). The UMTS is roughly divided into user equipments (UE) or terminals, a UTRAN, and a core network (CN). The UTRAN includes one or more radio network sub-systems (RNS). Each RNS includes an RNC and one or more Node Bs managed by the RNCs. Each UE connected to the UMTS network is managed at the lu interface towards the CN by only one RNC: the SRNC, which serves as an access point to the CN in order to transmit data of the specific UE and allocates a radio resource suitable for providing a service. If the UE moves into a region managed by a different RNC, it is connected to an SRNC by way of an DRNC of the region in which the UE has moved. The DRNC performs a simple partial function of routing user data assigning the requested resources over the air interface. That is, the discrimination of the SRNC and the DRNC is a logical discrimination related to a specific UE. In fact a DRNC for a given UE might play the role of SRNC for another UE. In the UTRAN structure each Node B necessarily has only one Controlling RNC (CRNC) which performs functions of controlling traffic load and congestion in a cell that the CRNC itself manages and a function of controlling acceptance of a new radio link set in the cell. The role of CRNC could also be assumed by DRNC or SRNC.

There are different types of configurations giving rise to competition at the lub interface, e.g.:
- The simplest one is of the type SRNC→ DRNC→ Node B where the DRNC is in its turn Serving RNC for a subset of HSDPA data flows on the lub interface, so that the two subsets are competitors at lub.
- The cascade of NEs might be a little more complex than a simple chain, for example (see fig.1) two HSDPA data flows could be simultaneously present at two lur interfaces between a single DRNC and two adjacent SRNCs that transmit two HSDPA data flows directed to user equipments (UE) served by either one or the other SRNC. Also in this case the two HSDPA data flows are competitors at lub.
- A further complexity is added when in the last configuration the DRNC is also SRNC for a subset of HSDPA data flows on the lub interface. In this case there are three competing HSDPA data flow groups at lub. Obviously, other configurations are possible.

The problem of how managing the FSN and DRT fields in the underlined cascaded configurations is not specifically addressed by both WO 2005/107293 A1 and WO 2005/104672 A2. Even from the latest 3GPP specifications (e.g. TR 25.902) a valid solution to this problem hasn't been proposed yet. According to 3GPP two only possibilities are allowed:
1. SRNC generates the "DRT" and "FSN" fields in the transmitted HS-DSCH Frame Protocol (FP) data frames. The DRNC (which is also the CRNC) copies these fields in the HS-DSCH FP frames transferred to the controlled NE, i.e. to the Node B. The latter can use these fields for the purpose of Congestion Control over the lines connecting to the SRNC (i.e. the lub and the lur interfaces), whereas the DRNC can use these fields for the purpose of Congestion Control over the line connecting to the SRNC (lur interface). This is according the so called "lub Cloud" philosohpy of TR 25.902.
2. SRNC generates the "DRT" and the "FSN" fields in the transmitted HS-DSCH FP data frames. The DRNC does not copy these fields in the HS-DSCH data frames transferred to the Node B. DRNC can use these fields for the purpose of Congestion Control over the lur and besides handles the egress traffic towards lub in order to avoid congestion, based on local statistical elaborations. No congestion control is done at the Node B. This is according the so called "lub pipe" philosophy of TR 25.902.

Neither option 1 nor option 2, allow for a separate and simultaneous congestion control both at the lur and at the lub interface, where "separate" means that if congestion is detected by a NE (e.g. the Node B) over an interface (e.g. lub), it is assured that only this interface is congested. More precisely:
- With option 1, since the DRNC copies the same "DRT" and "FSN" values in the transferred frames, it is not possible for the Node B to distinguish whether a detected congestion happens at the lub interface, or it comes from the lur interface or from both interfaces and only the DRNC actually knows the situation over the lur.
- With option 2, congestion control is possible only for DRNC over the lur.

According to 3GPP TR 25.902, a NE which detects congestion on one data flow can ask the controlling NE for a reduction of the credits for at least the data flow on which congestion has been detected. According to this statement from the 3GPP standard, it is also allowed that the credit reduction can be applied either to the data flow for which congestion has been detected or to all the data flows sharing the same physical line interface (see as example the lub interface of fig. 1). This latter handling is justified because, even if congestion is detected "first" by one data flow, it is very likely that all the data flows sharing the same line interface contribute to its state of congestion; therefore it is sensible and fair to properly distribute the credit reduction among all the competing data flows. So far no solution to the underlined problem is proposed. Only possibilities allowed by 3GPP standard to avoid race (competition) conditions among interfaces of cascaded nodes are:
- either to resolve congestion acting on a single data flow (at a single interface) with the drawbacks that it is very likely to have some degree of unfairness between the throughput of the competing data flows (on competing cascaded interfaces);
- or applying option 2 and disabling the flow control on the lub interface with the drawback that no enhanced congestion detection is done over this interface, and the drawbacks of option 1 occur again.

Competition of two or more HSDPA flows at the lub interface is the context for issuing by Node B indiscriminate request for reduction of credits for the acceptance of the HSDPA packets. The primary cause of this drawback is the incompleteness of known congestion detection procedures making Node B unaware on the true origin of the congestion along the transport layer. Although the unawareness is pending, when a single HSDPA data flow is present at the lub interface the indiscriminate credit reduction is not at all experienced, because only one lur is engaged for a given lub so that the congestion involves anyway a straightforward path between the single UE and its SRNC. In spite of that, the incompleteness is still a problem because the latter restricted scenario shall be considered only as an exception. It is in fact quite inconceivable that, because of the mobility of the UEs, the underlined scenario will remain unchanged during the whole time of enjoying an HSDPA service.

### Objects of the invention

Thus it is an object of the present invention to decouple the congestion control in a cascade of network elements involving the presence of both the lur and the lub interfaces. Without limitation, this object having better foundation in a scenario including at least two Serving RNC, a Drift RNC (considering that the latter might be configured as Serving RNC for another subset of data flows) and a Node B, so as to improve the reliability of the downlink transmission credits allocation in order to:
- avoid unfairness between the throughput of the competing data flows (at the interfaces among competing cascaded nodes),
- avoid that no enhanced congestion detection is done over the lub interface, caused by a wrong detection of Transport Network Layer (TNL) congestion situations or, more generally,
- so as to provide an increased flexibility in congestion management for the individual data flows.

### Summary of the invention

The invention achieves said objects by providing a method for controlling the transport network layer congestion detection during transport of packet data flows in a radio access network of a wireless communication system, including the steps of:
a) generating congestion control information elements at a first node configured as a service access point to the core network for a first group of user equipments, and including said congestion control information elements into a first packet data flow transmitted to a cascaded node;
b) receiving said first packet data flow transmitted by the first node, at a second node charged of processing said congestion control information elements for detecting a possible congestion state affecting the transport of the first packet data flow so as to stimulate a reduction on the allocation of transmission credits grantable to said first node relevant to at least the first packet data flow;
c) regenerating, at the second node, said congestion control information elements by synchronizing the received ones to the second node local timings and counters;
d) transmitting, by the second node, said first packet data flow with regenerated congestion control information elements to a base station, termed Node B hereafter, that transmits it on a high speed radio channel shared among said user equipments;
e) receiving, at the Node B, said first packet data flow and processing the included congestion control information elements for detecting a possible congestion state affecting the transport of the first packet data flow from the second node to the Node B itself so as to stimulate a reduction on the allocation of transmission credits grantable to said second node relevant to at least the first packet data flow, as disclosed in claim 1 (see fig.1A).

According to a little more complex embodiment of the invention the previous steps a) to e) are also executed for the case when the above said second node is also acting as a service access point to the core for a second group of user equipments towards the above said Node B via a second packet data flow (see fig.1B).

Still more complex embodiments are foreseeable, for example, the previous steps a) to e) are executed involving two nodes transmitting two packet data flows and configured as service access points to the core network for two distinct groups of user equipments, and a third node interfaced to the first two servicing nodes and to the Node B (see fig.1C). The same is replicable for more than two transmitting nodes.

A variant of the invention applicable to all the aforementioned embodiments, particularly useful in presence of cells with very small area, foresees the transmission of a packet data flow from at least a service access point to the core network for a group of user equipments and the Node B, trough a chain of intermediary second nodes each one synchronizing the upstream received congestion control information elements to node local timings and counters before transmitting the regenerated congestion control information elements to the downstream node. The same is replicable for more than two transmitting nodes.

In a preferred application, the method of the invention is performed in conjunction with the HSDPA service described in the relevant 3GPP Technical Specifications, and said congestion control information elements are the FSN and DRT fields of the HS-DSCH data frame. In such a case the transport network layer involves the lur interface between an SRNC and an DRNC and the lub interface between the DRNC and Node B.

According to step c), DRT is locked to the RFN counter of the DRNC as a sort of time stamp indicating the time instant when the HS-DSCH data frame is sent from the DRNC to the Node B. This way, the Node B will be able to measure the delay only over the lub without being influenced by the possible delay experienced over the lur by the received FP frame.

Also according to step c), FSN shall be incremented for each HS-DSCH data frame sent by the DRNC to the Node B. A frame found to be corrupted over the lur by the DRNC will not be sent to the Node B and will not cause increment of the FSN counter over the lub. Besides, if a frame is received over the lur and an FSN counter gap is detected (i.e. a number of missing FP frames), the DRNC will send this frame without gap in the respective FSN over the lub.

Node B will elaborate the fields DRT and FSN from the received FP frames over the lub, as currently foreseen by the 3GPP standard; in other words, no change to the Node B is required by the invention. Despite its neutrality towards the invention, Node B indirectly benefits of the different behaviour of DRNC in the allocation of transmission credits, as clarified just below.

According to step b) the DRNC, when receiving a Capacity Allocation message from the connected Node B for a HS-DSCH data flow, will take the minimum between the credit indication signalled by the Node B and the credits computed by the DRNC itself. This result will be indicated in the Capacity Allocation message sent to the SRNC over the lur for that data flow. This criterion however has not to be intended as restrictive, as other criteria are allowed by the invention. An example is that the DRNC sends to SRNC its own capacity allocation, and it locally handles the capacity allocation from the Node B via e.g. internal buffering.

Taking the minimum as stated above is a fair criterion for the selection between throughputs grantable at the lub and the lur interfaces, fairness consists of not to overgrant the node which requests the lower credit.

Another object of the invention is a radio access network for a wireless communication system where a controlling node (Drift RNC) comprises flow processing means arranged to implement the above method, and a wireless communication system including such a radio access network.

### Brief description of the drawings

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1A** is a schematic block diagram of a 3rd generation mobile communication, system useful for implementing the present invention;
- **fig.1B** is a little more complex scenario than the one of fig.1A;
- **fig.1C** is a still more complex scenario than the one of fig.1B;
- **fig.1D** is a variant of the system of fig.1A for cascaded Drift RNCs;
- **figs.2A** and **2B** are a simplified block diagram of Node B and RNC, respectively, of the system shown in figs.1A, 1B, and 1C;
- **figs.3A** and **3B** show the protocol stacks between an RNC and a Node B for HSDPA;
- **fig.4** shows the structure of an HS-DSCH FP data frame according to 3GPP Release 6 specifications.

### Detailed description of the preferred embodiment of the invention

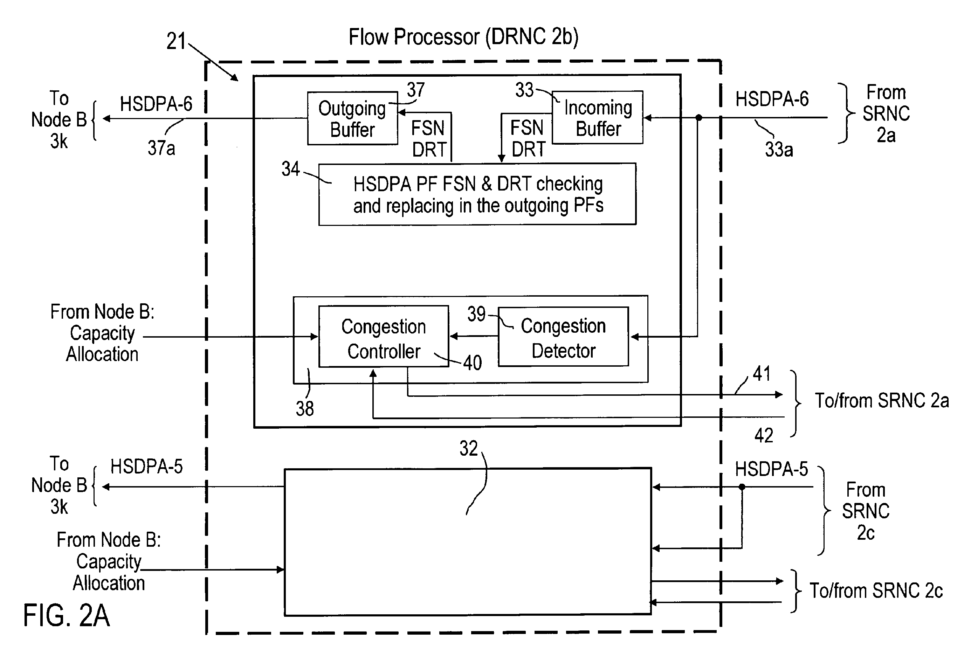

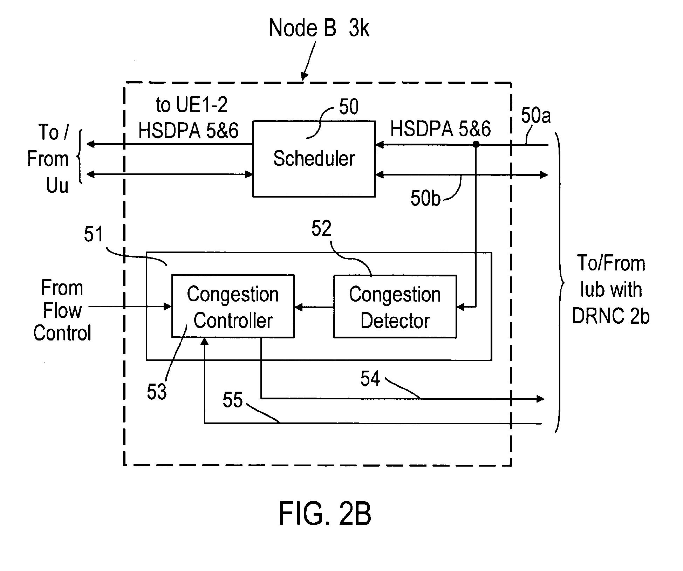

Referring to **fig.1A****,** there is schematically shown the architecture of a 3rd generation mobile communication system in which the invention can be employed. A situation is represented in the Figure with momentarily no competing flows on the lub but with competitors most probably coming soon. Core Network (CN) 1 is connected to a plurality of Radio Network Controllers (RNC), two of which are shown in figs.2a and 2b. Each RNC controls a plurality of base stations (Nodes B) 3a ... 3h and 3k ... 3n to which users 4a (for simplicity only one user equipment UE1 being shown in the drawing) have access. The RNCs 2a, 2b and the Nodes B 3a...3n form the radio access network of the system. Dotted line 5 in the Figure indicates an HSDPA packet flow directed to user 4a through both a Serving RNC 2a and a Drift RNC 2b, e.g. during downloading a file browsed from Internet, during a soft handover procedure when the user 4a is passing from an area served by RNC 2a to an area served by RNC 2b. For RNCs 2a and 2b two respective flow processors 20 and 21 are also indicated, which organise the packet flows as requested by the HSDPA specifications, which are also entrusted with the congestion detection and congestion control functions at the RNC, and which are also entrusted with re-generation of FSN and DRT fields when are playing the role of DRNC, according to the method of the invention, as it will be disclosed below. In the specific context only the Flow Processor 21 of RNC 2b is charged to implement the method of the invention. References lu, lub, lur, Uu denote the homonymous interfaces defined by 3GPP specifications.

The architecture of **fig.1B** is the same as the preceding fig.1A but now another HSDPA packet flow 6 directed to a second group of users schematized by 4b (UE2) is managed by the RNC 2b that also controls Node B 3a. In such a case RNC 2b is configured as SRNC for users 4b and contemporarily as DRNC for users 4a. The HSDPA flows 5 and 6 compete on the lub interface to share the available resources. From the comparison of fig.1B with fig.1A the utility of a permanent regeneration mechanism inside a DRNC is evident; in fact, although in the transitory configuration of fig.1A there is not competing data flow on the lub interface and so the FSN and DRT regeneration could be in principle avoided, nevertheless the competing situation of fig.1B is the most probable one or might be sudden turn up, so that that DRNC 2b is better already trigger regenerated HS-DSCH frames.

Referring to **fig.1C****,** there is schematically shown a little more complex architecture in respect of the architecture depicted in the preceding Figure 1B. The alternative architecture of the UMTS network includes a third Radio Network Controller 2c connected to another plurality of Nodes B, 3o...3r. The preceding numbering of the represented elements still remains with the exception than now two users equipments (UE1-2) 4a and 4c served by Node B 3k are considered. The only Flow Processor 21 inside RNC 2b is represented in Figure 1C. Dotted line 5 indicates a first HSDPA packet flow directed to user 4a through both a Serving RNC 2a and a Drift RNC 2b, e.g. during downloading a file browsed from Internet, when the user is passing from an area served by RNC 2a to an area served by RNC 2b through a soft handover procedure. Dashed-and-dotted line 6 indicates a second HSDPA packet flow directed to user 4c through both a Serving RNC 2c and the Drift RNC 2b, e.g. during playing an audio/video streaming content browsed from Internet, when the user is passing from an area served by RNC 2c to an area served by RNC 2b through a soft handover procedure. In the specific context the Flow Processor 21 of drift RNC 2b is charged to implement the method of the invention. Both field FSN in the header and field DRT in the payload are of interest for the understanding of the invention, as stated in the introduction of the specification.

Referring to **fig.1D****,** there is schematically shown a variant of the invention which differs from the previous architecture of **fig.1A** by the fact to include a chain of Drift RNC 2ba, 2bb, .... 2bm, and 2b between the SRNC 2a and Node B 3k. Each DRNC is connected to the upstream DRNC and to the downstream DRNC by relevant lur interfaces. Dotted line 5 in the Figure indicates an HSDPA packet flow coming from the core network 1 and directed to user 4a through SRNC 2a, cascaded DRNCs 2ba-2b, and Node B 3k. At each DRNC crossing the incoming HSDPA packet flow 5 is regenerated locally to the DRNC giving rise to sequentially re-synchronized congestion control information elements 5bb, 5bm, and 5b useful to detect the exact point a congestion is manifested. According to the circumstances, the chain of DRNC nodes can be implemented for all involved SRNC nodes.

**Fig.2A** is a simplified representation of Flow Processor 21 inside the DRNC 2b (fig.1 C) controlled according to the method of the present invention. The same representation is valid for the Flow Processor inside each DRNC depicted in the other preceding Figures 1A, 1B and 1D, with the only exception consisting in that the lub is replaced with the lur interface for DRNCs 2ba, 2bb, and 2bm (fig. 1 D). Flow Processor 21 comprises two coprocessors 31 and 32 dedicated to the processing of the two HSDPA packet flows 5 and 6 coming from the two lur interfaces with the SRNC 2a and 2c, respectively. For the sake of simplicity the only coprocessor 31 is described but the same description is valid also for the coprocessor 32. The subdivision in many coprocessors should be considered only as a practical way to simplify the description valid from the functional point of view. The effective implementation of the functional multiprocessor architecture is in the prerogative of the designer, who might consider the various coprocessors as various instances (design pattern) of a model managed by an object-oriented software. Coprocessor 31 includes an incoming buffer 33 for the HSDPA packet flow 6 transmitted on the lur interface by the SRNC 2a (fig.1 C) addressed to the UE1 4a. Reference 33a schematises the user plane transport channel HS-DSCH on the lur interface for the HSDPA-6 incoming packet flow, whereas 37a schematises the user plane transport channel HS-DSCH on the lub interface for the HSDPA-6 outgoing packet flow. The bufferized HSDPA frames are read by a functional block 34 which also includes its own time reference signals and counters. Block 34 extracts the two fields FSN and DRT from the incoming HSDPA frames and replace both of them with two new corresponding fields FSN and DRT re-generated using its internal time signals on the basis of the rules of the present invention, that will be specified later on. The re-generated HSDPA frames are sent to an outgoing buffer 37 to be forwarded to the Node B 3k on the lub interface as a first HSDPA packet flow addressed to the user 4a.

The HSDPA packet flow coming from SRNC 2a on the HS-DSCH transport channel 33a is also directed to the input of a congestion management functional block 38, which comprises a congestion detector 39 and a cascaded congestion controller 40. Regenerator block 34 and congestion manager 38 (fig.2A) work in parallel. Congestion detector 39 receives the FSN and DRT fields of the HSDPA frames on the HS-DSCH transport channel 33a, performs certain measurements on the FSN and DRT fields and stores the results of such measurements, for instance in order to detect when the delay variation or the number of frames lost within given observation windows exceed respective thresholds. congestion detector 39 provides congestion indications (or triggers) to congestion controller 40, which dynamically evaluates the maximum data rate the lur transport layer is considered capable of handling, and uses this value of capacity, together with the Capacity Allocation received from the Node B, to properly calculate the capacity allocation credits to forward to the SRNC. The resulting capacity (transmission credits) is then granted to the SRNC 2a via out-of-band capacity allocation messages. Reference 41 denotes the control channel conveying such allocation messages to SRNC 2a. The SRNC 2a can autonomously stimulate the issue of capacity allocation messages by sending out-of-band capacity request messages to the DRNC. Reference 42 denotes the control channel conveying such request messages sent by SRNC 2a.

According to TS 25.425 paragraphs 5.2.5. and 5.2.6, the activity of regulating the HSDPA throughput on the lur interface (but also on the lub) is supported by the following messages of the user plane protocol for common transport channel data streams: "HS-DSCH CAPACITY REQUEST" and "HS-DSCH CAPACITY ALLOCATION". The "HS-DSCH CAPACITY REQUEST" message is sent from the SRNC to the DRNC by indicating the user buffer size in the SRNC for a given priority level. "HS-DSCH CAPACITY ALLOCATION" is the replay message from the DRNC. The DRNC may use this message even to modify the capacity at any time, irrespective of the reported user buffer status. The HS-DSCH CAPACITY ALLOCATION frame is used by the DRNC to control the user data flow. *HS-DSCH Credits* IE indicates the number of MAC-d PDUs that the SRNC is allowed to transmit for the MAC-d flow and the associated priority level indicated by the *Common Transport Channel Priority Indicator* IE.

**Fig.2B** is a very simplified representation of the structure of a Node B 3k (fig. 1C), which enjoys of the invention in a transparent way because still behaves as currently foreseen by the 3GPP standard. Node B 3k has been represented as split into a scheduling portion 50 and a congestion management portion 51. The scheduler 50 is fed with the HSDPA flows 5 & 6 originated by the SRNC 2a and 2c (and in case by the RNC 2b acting as SRNC) and forwarded on the lub interface by the DRNC 2b after having re-generated the transport-congestion control fields FSN and DRT locally. Reference 50a schematises the user plane transport channel HS-DSCH on the lur interface for the HSDPA 5 & 6 incoming packet flows, whereas reference 50b schematises the channels involved in the control plane signalling required by the operation of the scheduler 50. Scheduler 50 manages the transmission of the HSDPA packet flows 5 & 6 to the users exemplified in fig.1C as 4a and 4c; it includes packet buffering and allocation of downlink resources to the users.

Congestion management portion 51 includes a congestion detector 52 and a cascaded congestion controller 53. Differently from the distributed architecture representation of the DRNC 2b (fig.2a), the congestion manager 51 is described by means of a centralized architecture accounting for both HSDPA 5 & 6 on the lub interface. As a result of the scheduling activity, the resulting capacity (transmission credits) is then granted to the DRNC 2b via out-of-band capacity allocation messages. Reference 54 denotes the control channel conveying such allocation messages to DRNC 2b. The DRNC 2b can autonomously stimulate the issue of capacity allocation messages by sending out-of-band capacity request messages to the Node B 3k. Reference 55 denotes the control channel conveying such request messages sent by DRNC 2b. Node B 3k only indirectly benefits from the invention and not further detail about its function is necessary.

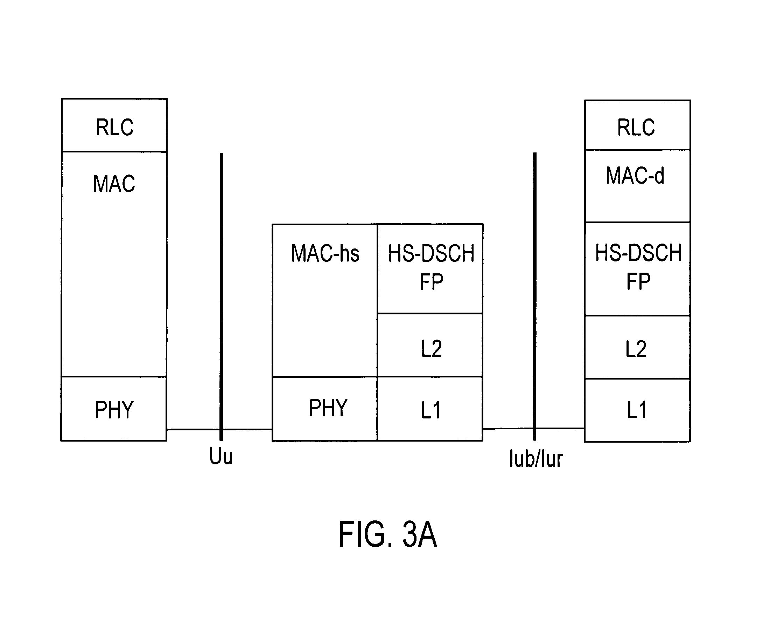

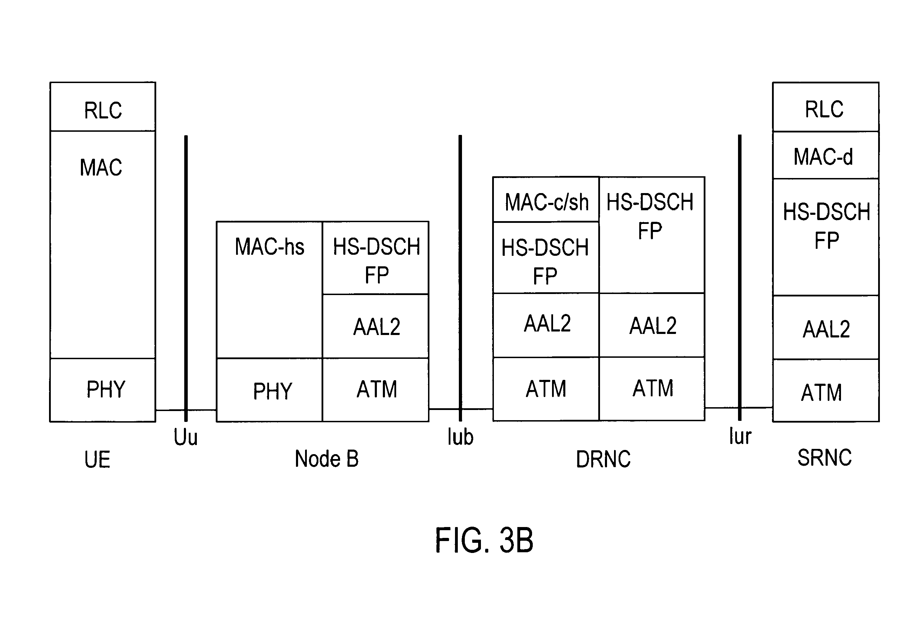

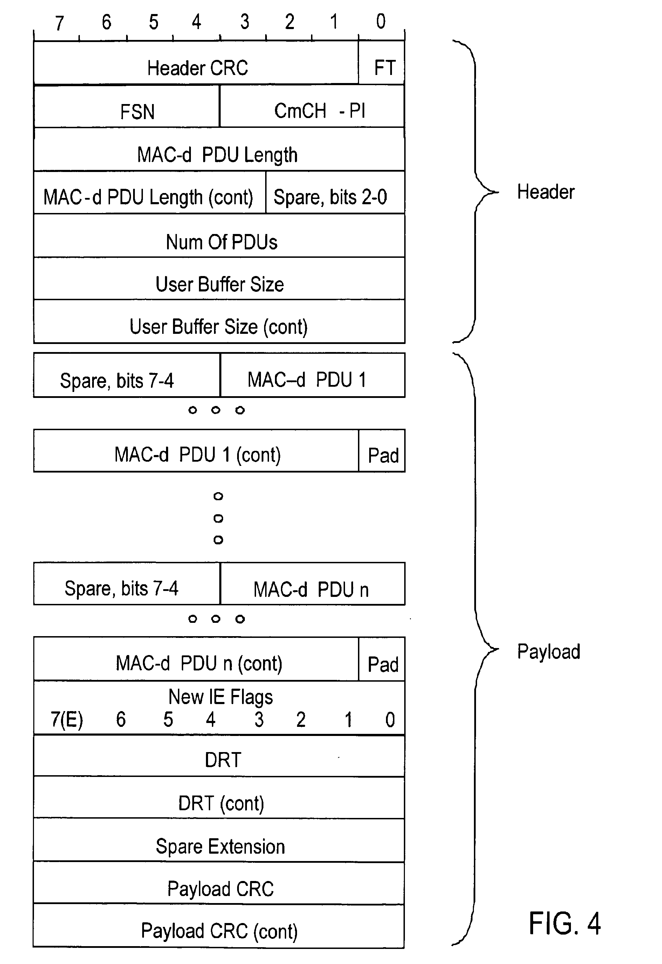

For an easier understanding of the invention, graphical representations of the protocol stacks for transmission of an HSDPA packet flow from an RNC to a user and of the structure of an HS-DSCH FP data frame according to Release 6 of the 3GPP specifications are enclosed as **figs.3a****,** **3b** and **4****,** respectively. Both the protocol stacks and the frame structure are well known to the skilled in the art and no detailed description thereof is therefore necessary. Reference can be made for instance to the above-mentioned 3GPP specifications.

In **fig.3a** (see 3GPP TS 25.308 paragraph 5.1.1) the physical and data link layers at the lub/lur interface are generally denoted L1, L2. **Fig.3b** (see 3GPP TS 25.308 paragraph 5.1.2) explicitly refers to the use of ATM protocol at the physical layer and illustrates the stack also in correspondence of a DRNC. The present invention operates at the level of the HS-DSCH FP and therefore is independent of the transport protocol used (which could be also the IP or Ethernet based).

**Fig.4** indicates the HS-DSCH FP frame structure reported in 3GPP TS 25.435. The two fields FSN and DRT are included. The existence of valid DRT values is signalled by a flag in the "New IE Flags" field in the payload, which field just serves to indicate which information is valid in the fields that follow.

Now the method of the invention is described without reference to a specific flow-chart according to the following steps.

In **Step 1** the HS-DSCH frames of **fig.4** are continuously generated by SRNC 2a and 2c, according to the amount of service requests and the current downlink allocation; the frames are sent to the DRNC 2b to be forwarded to Node B 3k and then to the UEs 4a and 4b. Both SRNC 2a and 2c, independently to each other, initialize the FSN and DRT fields with values locked to their own RFN counter relevant to the HS-DSCH protocol frame carrying the HSDPA packet flows 6 and 5. Always in Step 1 DRT is incremented of one unit every 1 ms and FSN is incremented for each HS-DSCH data frame sent by the SRNC to the Node B.

In **Step 2** DRNC 2b processes on per flow basis the received FSN and DRT information elements according to standard procedure in order to detect an incoming congestion of the transport layer at the respective lur interface for requesting a reduction of the transmission credits allocated to the SRNC 2a or 2c. The DRNC 2b, when receiving a Capacity Allocation message from the connected Node B 3k for a HS-DSCH data flow 5 or 6, will properly combine the credit indication signalled by the Node B 3k and the credits computed by the DRNC 2b itself to calculate the number of credits to be sent via the Capacity Allocation message to the SRNC 2a or 2c over the lur interface relevant for that data flow. Taking the minimum between the two indications is a possible fair criterion.

Step 2 is applicable as said above also for the DRNC nodes 2ba, 2bb, and 2bm (fig.1D), implemented if necessary to the two sides of DRNC 2b, with the only exceptions that Node B and lub are replaced with the downstream DRNC and the in-between lur, respectively.

In **Step 3** DRNC 2b locally regenerates on per flow basis the FSN and DRT information elements thus replacing the old IEs before routing the flows to the Node B 3k that transmits the HS-DSCH data frames on the air interface Uu. For every flow the DRT IE is locked to the RFN counter of the DRNC 2b as a sort of time stamp indicating the time instant when the HS-DSCH data frame is sent to the Node B from the DRNC. FSN is incremented for each HS-DSCH data frame sent by the DRNC 2b to the Node B 3k. A frame found to be corrupted over the lur interface by the DRNC 2b will not be sent to the Node B. Besides, if a frame is received over the lur interface and an FSN gap is detected in the counting sequence, the DRNC 2b will send this frame without gap in the respective FSN over the lub interface.

Step 3 is applicable as said above also for the considered DRNC nodes 2ba, 2bb, and 2bm (fig.1 D) with the only exceptions that Node B and lub are replaced with the downstream DRNC and the lur in-between, and also considering that for each flow as 5, 5bb, 5bm crossing a DRNC as 2ba, 2bb, 2bm a relevant DRT IE is locked to the RFN counter inside the crossed DRNC as a sort of time stamp indicating the time instant when the HS-DSCH data frame is sent to the downstream DRNC 2bb, 2bm, 2b from the crossed DRNC 2ba, 2bb, 2bm.

In **Step 4** the Node B 3k receives the HS-DSCH data frame over the lub interface common to the HSDPA flows 5 and 6 and processes on per flow basis the received FSN and DRT information elements according to standard procedure in order to detect an incoming congestion of the transport layer at the lub interface and consequently formulate the appropriate credit allocation to the DRNC 2b.

Although the invention has been described with particular reference to a preferred embodiment, it will be evident to those skilled in the art, that the present invention is not limited thereto, but further variations and modifications may be applied without departing from the scope of the claims.

## Claims

1. Method for controlling the transport network layer congestion detection during transport of packet data flows (5) in a radio access network (2a, 2b, 3a...3n) of a wireless communication system, including the steps of:
a) generating congestion control information elements (FSN, DRT) at a first node (2a) configured as a service access point to the core network (CN) for a first group of user equipments (4a), and including said congestion control information elements into a first packet data flow (5) transmitted to a cascaded node (2b);
b) receiving said first packet data flow (5) transmitted by the first node (2a), at a second node (2b) charged of processing said congestion control information elements (FSN, DRT) for detecting a possible congestion state affecting the transport of the first packet data flow (5) so as to stimulate a reduction on the allocation of transmission credits grantable to said first transmitting node (2a) relevant to at least the first packet data flow (5),
**characterized in that** further comprises the steps of:
c) regenerating, at the second node (2b), said congestion control information elements (FSN, DRT) by synchronizing the received ones to the second node (2b) local timings and counters;
d) transmitting, from the second node (2b), said first packet data flow (5) with regenerated congestion control information elements (FSN, DRT) to a base station (3k), termed Node B hereafter, that retransmits it on a high speed radio channel shared among said user equipments (4a);
e) receiving, at the Node B (3k), said first packet data flow (5) and processing the included congestion control information elements (FSN, DRT) for detecting a congestion state affecting the transport of the first packet data flow (5) so as to stimulate a reduction on the allocation of transmission credits grantable to said second node (2b) relevant to at least the first packet data flow (5).

2. The method of claim 1, **characterized in that** said steps a) to d) are also executed for said second node (2b) configured as a service access point to the core network (CN) for transmitting a second packet data flow (6) to a second group of user equipments (4b).

3. The method of claim 1, **characterized in that** steps a) to d) are also executed for at least a third node (2c) configured as a service access point to the core network (CN) for transmitting a second packet data flow (6) to a second group of user equipments (4c).

4. The method of any claim from 1 to 3, **characterized in that** said second node (2b) when receiving a capacity allocation message (54) from said Node B (3k) for a data flow (5, 6) takes the minimum between the credit indication signalled by the Node B (3k) and the credits computed by itself.

5. The method of claim 4, **characterized in that** said second node (2b) includes said minimum credit value in a capacity allocation message (41) for that data flow (5, 6) sent to said first node (2a, 2c).

6. The method of any claim from 1 to 3, **characterized in that** said second node (2b) uses the capacity allocation message (54) received from said Node B (3k) for a data flow (5, 6) for handling the egress traffic towards said Node B and grants to said first node (2a, 2c) only the number of credits computed by itself.

7. The method of any claim from 1 to 6, **characterized in that** said packet flows (5, 6) are relevant to the High Speed Downlink Packet Access service and said congestion control information elements are a Frame Sequence Number FSN and a Delay Reference Time DRT included by a Serving Radio Network Controller (2a, 2c) into respective fields of data frames of the High-Speed Downlink Shared Channel Frame Protocol, called HS-DSCH FP.

8. The method of claim 7, **characterized in that** said DRT information is locked to the Frame Number counter, called RFN, of the second node (2b) for indicating the time instant when the HS-DSCH data frame (5, 6) is sent to the Node B (3k) by the second node (2b) configured as Drift Radio Network Controller, called DRNC.

9. The method of claim 8, **characterized in that** said FSN information element is incremented for each HS-DSCH data frame (5, 6) sent by the DRNC (2b) to the Node B (3k).

10. The method of claim 9, **characterized in that** if a HS-DSCH data frame (5, 6) received by said DRNC (2b) is found to be corrupted it is not sent to the Node B (3k).

11. The method of claim 9, **characterized in that** if a HS-DSCH data frame (5, 6) is received at said DRNC (2b) with a gap in the FSN counting, the DRNC (2b) regenerates this HS-DSCH data frame without gap in the FSN sequence.

12. A radio access network (2a, 2b, 2c, 3a...3r) of a wireless communication system comprising:
- at least a first node (2a, 2c) configured as a service access point to the core network (CN) for conveying a packet flow (5, 6) to a group of user equipments (4a, 4c), comprising flow-processing means for including some congestion control information elements (FSN, DRT) into such packet flow (5, 6) that is transmitted to a cascaded node (2b);
- a second node (2b) interfaced to said first node (2a, 2c) for receiving said first packet data flow (5, 6) and retransmitting it to a cascaded node (3k), comprising congestion detection means (39) for detecting possible congestion conditions at an interface (lur) with the first node (2a, 2c) based on the results of measurements performed on the received congestion control information elements (FSN, DRT);
- a base station(3k), termed Node B hereafter, interfaced to said second node (2b) for receiving said first packet data flow (5) and retransmitting it on a high speed radio channel shared among said group of user equipments (4a, 4c), comprising congestion detection means (52) for detecting possible congestion conditions at an interface (lub) with the second node (lub) based on the results of measurements performed on the received congestion control information elements (FSN, DRT),
**characterized in that**:
- the second node (2b) comprises resynchronization means (34) arranged for regenerating the received congestion control information elements (FSN, DRT) locally to the second node.

13. The radio access network of claim 12, **characterized in that** said second node (2b) comprises congestion control means (40) triggered by said congestion detection means (39) for generating capacity allocation messages (41) towards the first node (2a, 2c) stimulating a reduction on the allocation of transmission credits grantable to said first transmitting node (2a) relevant to at least said packet data flow (5, 6).

14. The radio access network of claim 12 or 13, **characterized in that** said Node B (3k) comprises congestion control means (53) triggered by said congestion detection means (52) for generating capacity allocation messages (54) towards the second node (2b) stimulating a reduction on the allocation of transmission credits grantable to said second node (2b) relevant to said packet data flow (5, 6).

15. The radio access network of any claim from 12 to 14, **characterized in that** comprises a third node (2c, 2a) configured as a service access point to the core network (CN) for conveying another packet data flow (6, 5) to a another group of user equipments (4c, 4a), comprising flow-processing means for including some congestion control information elements (FSN, DRT) into such packet flow (6, 5) that is transmitted to the second node (2b).

16. The radio access network of claim 14, **characterized in that** said second node (2b) is further configured with the additional features of the third node (2c, 2a).

17. The radio access network of any claim from 12 to 16, **characterized in that** said congestion controlling means (38) included in the second node (2b) when receiving a capacity allocation message from said Node B (3k) for a data flow (5, 6) are instructed to process the credit indication signalled by the Node B (3k) and the credits computed by itself obtaining a granted credit value.

18. The radio access network of claim 17, **characterized in that** said congestion controlling means (38) included in the second node (2b) are arranged to include the granted credit value in a capacity allocation message sent to said first node (2a, 2c) for that data flow (5, 6).

19. The radio access network of any claim from 12 to 18, **characterized in that** said packet flows (5, 6) are relevant to the High Speed Downlink Packet Access service and said congestion control information elements are a Frame Sequence Number FSN and a Delay Reference Time DRT included by a Radio Network Controller (2a, 2c) into respective fields of data frames of the High-Speed Downlink Shared Channel Frame Protocol, called HS-DSCH FP.

20. The radio access network of claim 19, **characterized in that** said network nodes (2a, 2b, 2c) are connected to the core network (CN) through the lu interface, the second node (2b) is further connected to the other nodes (2a, 2c) through the lur interface and to the Node B (3k) through the lub interface, and the groups of users (4a, 4b) are connected on air to the base station through the Uu interface.

21. The radio access network of claim 19 or 20, **characterized in that** said resynchronization means (34) are instructed to lock the DRT information element to the counting of a Radio Network Controller Frame Number Counter, called RFN, comprised in the second node (2b) for indicating the time instant when the HS-DSCH data frame (5, 6) is sent to the Node B (3k) by the second node (2b) configured as Drift Radio Network Controller, called DRNC.

22. The radio access network of claim 21, **characterized in that** said resynchronization means (34) are instructed to increment the FSN value for each HS-DSCH data frame (5, 6) sent by the DRNC (2b) to the Node B (3k).

23. The radio access network of claim 22, **characterized in that** said resynchronization means (34) are instructed to check if a HS-DSCH data frame (5, 6) is corrupted so as not to send it to the Node B (3k).

24. The radio access network of claim 22, **characterized in that** said resynchronization means (34) are instructed to check if a HS-DSCH data frame (5, 6) is received with a gap in the FSN counting so as to regenerate this HS-DSCH data frame without gap in the FSN sequence.

25. The radio access network of any claim from 12 to 24, **characterized in that** said second node (2b) is interfaced to said first node (2a, 2c) through a chain of cascaded second nodes (2ba, 2bb, 2bm) each one comprising:
- its own resynchronization means (34) arranged for regenerating locally to the node the congestion control information elements (FSN, DRT) received from the upstream node (2a, 2ba, 2bb);
- means (34, 37) for retransmitting said first packet data flow (5bb, 5bm, 5b) inclusive of regenerated information elements (FSN, DRT) to a cascaded node (2bb, 2bm, 2b).

26. A wireless communication system, comprising a radio access network (2a, 2b, 3a...3n) as claimed in any claim from 12 to 25.
